# EUROPÄISCHE PATENTANMELDUNG

(11) **EP 0 964 564 A2**
(43) Veröffentlichungstag der Anmeldung: **15.12.1999**
(21) Anmeldenummer: 99110338.3
(22) Anmeldetag: 28.05.1999
(51) Int. Cl.: H04M 3/42, H04M 1/27

(54) **Verfahren zur Abfrage gespeicherter Rufnummerninformationen**

(30) Priorität: 09.06.1998 DE 19825659
(71) Anmelder: ROBERT BOSCH GMBH, 70442 Stuttgart (DE)
(72) Erfinder: Steuer, Manfred, 65719 Hofheim (DE)

(57) **Zusammenfassung**

Es wird ein Verfahren zur Abfrage gespeicherter Rufnummerninformationen vorgeschlagen, das eine Fernabfrage einer Anrufliste ermöglicht. Dabei werden die gespeicherten Rufnummerninformationen mindestens eines bei einem an ein Telekommunikationsnetz (30) angeschlossenen ersten Telekommunikationsendgerät (100) eingegangenen Rufes abgefragt, wobei die Rufnummerninformationen in einem dem ersten Telekommunikationsendgerät (100) zugeordneten Speicher (131, 430) abgelegt sind. Von einem zweiten an das Telekommunikationsnetz (30) angeschlossenen Telekommunikationsendgerät (10) wird eine Verbindung zu dem dem ersten Telekommunikationsendgerät (100) zugeordneten Speicher (131, 430) aufgebaut. Die gespeicherten Rufnummerninformationen werden an das zweite Telekommunikationsendgerät (10) übertragen.

## Beschreibung

### Stand der Technik

Die Erfindung geht von einem Verfahren zur Abfrage gespeicherter Rufnummerninformationen nach der Gattung des Hauptanspruchs aus.

Es ist bereits das Leistungsmerkmal Anrufliste bekannt, bei dem gespeicherte Rufnummerninformationen mindestens eines bei einem an ein Telekommunikationsnetz angeschlossenen Telekommunikationsendgerät eingegangenen Rufes abgefragt werden können, wobei die Rufnummerninformationen in einem dem Telekommunikationsendgerät zugeordneten Speicher abgelegt sind.

### Vorteile der Erfindung

Das erfindungsgemäße Verfahren mit den Merkmalen des Hauptanspruchs hat demgegenüber den Vorteil, daß von einem zweiten an das Telekommunikationsnetz angeschlossenen Telekommunikationsendgerät eine Verbindung zu dem dem ersten Telekommunikationsendgerät zugeordneten Speicher aufgebaut wird und daß die gespeicherten Rufnummerninformationen an das zweite Telekommunikationsendgerät übertragen werden. Auf diese Weise ist eine Fernabfrage der Anrufliste möglich, so daß ein Benutzer zur Abfrage der Anrufliste örtlich nicht an sein Telekommunikationsendgerät gebunden ist, sondern die Anrufliste an einem beliebigen Zugang des Telekommunikationsnetzes abfragen kann. Auf diese Weise wird außerdem eine bessere Erreichbarkeit des Benutzers innerhalb des Telekommunikationsnetzes erzielt.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß die gespeicherten Rufnummerninformationen nur nach Eingabe einer zulässigen Zugangsberechtigung am zweiten Telekommunikationsendgerät zum zweiten Telekommunikationsendgerät übertragen werden. Auf diese Weise wird sichergestellt, daß die Anrufliste nur von Berechtigten am zweiten Telekommunikationsendgerät abgefragt werden kann.

Ein weiterer Vorteil besteht darin, daß die Verbindung vom zweiten Telekommunikationsendgerät zum Speicher nur dann aufgebaut wird, wenn am zweiten Telekommunikationsendgerät eine für die Abfrage der gespeicherten Rufnummerninformationen entsprechende Kennung eingegeben wird. Auf diese Weise können unterschiedliche Fernabfragedienste realisiert und durch jeweils eine Kennung angesprochen werden. Eine Fernabfrage eines Anrufbeantworters des ersten Telekommunikationsendgerätes kann somit beispielsweise von einer Fernabfrage der Anrufliste des ersten Telekommunikationsendgerätes unterschieden werden.

Ein weiterer Vorteil besteht darin, daß die gespeicherten Rufnummerninformationen nach Übertragung zum zweiten Telekommunikationsendgerät in einem dem zweiten Telekommunikationsendgerät zugeordneten Speicher abgelegt werden. Auf diese Weise bleibt die Anrufliste am zweiten Telekommunikationsendgerät verfügbar, so daß der Benutzer diese Anrufliste ohne erneuten Gebührenaufwand jederzeit am zweiten Telekommunikationsendgerät abrufen kann.

Ein weiterer Vorteil besteht darin, daß vom ersten Telekommunikationsendgerät oder einer mit dem ersten Telekommunikationsendgerät verbundenen Nebenstellenanlage ein Aufforderungssignal an das zweite Telekommunikationsendgerät übertragen wird, daß als Antwort auf das Aufforderungssignal die für die Abfrage der gespeicherten Rufnummerninformationen entsprechende Kennung am zweiten Telekommunikationsendgerät eingegeben wird und daß die gespeicherten Rufnummerninformationen frühestens dann an das zweite Telekommunikationsendgerät übertragen werden, wenn am ersten Telekommunikationsendgerät oder an der Nebenstellenanlage die für die Abfrage der gespeicherten Rufnummerninformationen entsprechende Kennung empfangen wurde. Auf diese Weise kann der Benutzer des zweiten Telekommunikationsendgerätes anhand des Aufforderungssignals feststellen, daß überhaupt eine Anrufliste am ersten Telekommunikationsendgerät oder einer mit dem ersten Telekommunikationsendgerät verbundenen Nebenstellenanlage abrufbar ist. Eine überflüssige Kennungseingabe wird somit vermieden.

Ein weiterer Vorteil besteht darin, daß, sofern die gespeicherten Rufnummerninformationen eine Rufnummer umfassen, nach Empfang der gespeicherten Rufnummerninformationen vom zweiten Telekommunikationsendgerät diese Rufnummer angewählt wird. Auf diese Weise wird am zweiten Telekommunikationsendgerät ein automatischer Rückruf eingeleitet, so daß der Wählvorgang für den Benutzer entfällt und der Bedienkomfort erhöht wird.

Ein weiterer Vorteil besteht darin, daß die Rufnummer erst dann angewählt wird, wenn eine Auswahltaste betätigt wird, die diese Rufnummer aus den am zweiten Telekommunikationsendgerät empfangenen gespeicherten Rufnummerninforrnationen auswählt. Auf diese Weise liegt es im Ermessen des Benutzers, einen Rückruf einer an das zweite Telekommunikationsendgerät übertragenen Rufnummer der Anrufliste des ersten Telekommunikationsendgerätes zu starten. Die Bedienung wird somit noch mehr an die Bedürfnisse des Benutzers angepaßt und unnötige Rückrufe werden verhindert.

### Zeichnung

Ausführungsbeispiele der Erfindung sind in der Zeichnung dargestellt und in der nachstehenden Beschreibung näher erläutert. Es zeigen Figur 1 ein Blockschaltbild eines ersten Telekommunikationsendgerätes mit einem Speicher für eine Anrufliste, Figur 2 ein über ein Telekommunikationsnetz mit dem ersten Telekommunikationsendgerät verbundenes zweites Telekommunikationsendgerät, Figur 3 ein über eine Nebenstellenanlage mit dem ersten Telekommunikationsendgerät verbundenes zweites Telekommunikationsendgerät, Figur 4 ein Blockschaltbild einer Nebenstellenanlage zum Anschluß des ersten Telekommunikationsendgerätes und Figur 5 einen Ablaufplan für eine Steuerung des ersten Telekommunikationsendgerätes bzw. der Nebenstellenanlage.

### Beschreibung der Ausführungsbeispiele

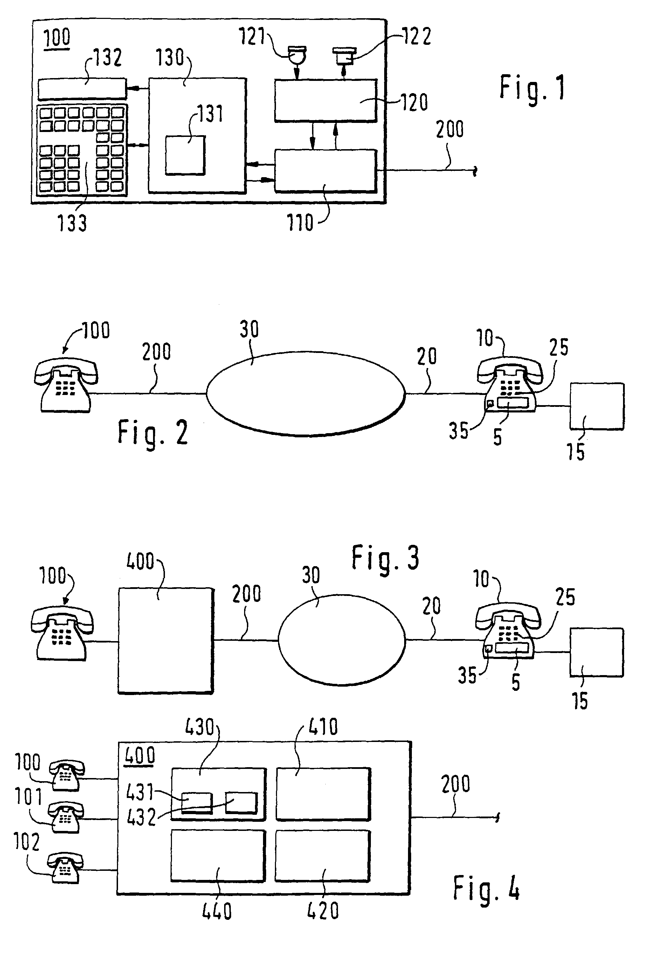

In Figur 1 kennzeichnet 100 ein erstes Telekommunikationsendgerät, das eine Anzeigevorrichtung 132 und eine Tastatur 133 umfaßt, die an eine Steuerung 130 angeschlossen sind. Die Steuerung 130 umfaßt einen ersten Speicher 131 für eine Anrufliste. An die Steuerung 130 ist außerdem eine Leitungsschnittstelle 110 angeschlossen, über die das erste Telekommunikationsendgerät 100 über eine erste Anschlußleitung 200 an einem öffentlichen oder privaten Vermittlungsnetz 30 gemäß Figur 2 angeschlossen ist. Das erste Telekommunikationsendgerät 100 umfaßt weiterhin eine Anschaltung 120 eines Lautsprechers 122 und eine Mikrofons 121, die an die Leitungsscbnittstelle 110 angeschlossen ist. Gemäß Figur 2 ist ein zweites Telekommunikationsendgerät 10 über eine zweite Anschlußleitung 20 ebenfalls an das Vermittlungsnetz 30 angeschlossen. Bei dem Vermittlungsnetz 30 kann es sich um ein analoges oder ein digitales Vermittlungsnetz handeln. Im Falle eines digitalen Vermittlungsnetzes 30 kann es sich beispielsweise um ein ISDN-Netz (Integrated Services Data Network) handeln. Das zweite Telekommunikationsendgerät 10 kann gemäß Figur 2 eine Anzeigevorrichtung 5 und eine Auswahltaste 35 aufweisen. Das zweite Telekommunikationsendgerät 10 kann mit einem ihm zugeordneten zweiten Speicher 15 verbunden sein. Der zweite Speicher 15 kann dabei auch im zweiten Telekommunikationsendgerät 10 integriert sein.

Gemäß Figur 4 kann das erste Telekommunikationsendgerät 100 auch zusammen mit einem dritten Telekommunikationsendgerät 101, einem vierten Telekommunikationsendgerät 102 und gegebenenfalls weiteren Telekommunikationsendgeräten an eine Nebenstellenanlage 400 angeschlossen sein. Das erste Telekommunikationsendgerät 100 ist dann wie auch das dritte Telekommunikationsendgerät 101 und das vierte Telekommunikationsendgerät 102 über die Nebenstellenanlage 400 und die erste Anschlußleitung 200 mit dem Vermittlungsnetz 30 gemäß Figur 3 verbunden. Die Nebenstellenanlage 400 umfaßt einen dritten Speicher 430, der eine zweite Anrufliste 431 und eine Teilnehmerliste 432 mit den Rufnummern der an die Nebenstellenanlage 400 angeschlossenen Teilnehmer umfaßt. Den Einträgen in der zweiten Anrufliste 431 ist dabei jeweils die Rufnummer des entsprechend gerufenen, an die Nebenstellenanlage 400 angeschlossenen Telekommunikationsendgerätes 100, 101, 102 aus der Teilnehmerliste 432 zugeordnet, so daß jeder Eintrag der zweiten Anrufliste 431 dem entsprechend gerufenen, an die Nebenstellenanlage 400 angeschlossenen Telekommunikationsendgerät 100, 101, 102 zugeordnet werden kann. Somit kann die zweite Anrufliste 431 für alle an die Nebenstellenanlage 400 angeschlossenen Telekommunikationsendgeräte 100, 101, 102 gemeinsam vorgesehen sein. Die Nebenstellenanlage 400 umfaßt außerdem einen Paßwortspeicher 440, einen Empfänger 410 für Signale, die z. B. nach dem Mehrfrequenzverfahren (MFV) codiert sind und einen Sender 420, der ein Zeichensender, beispielsweise ein Modem oder ein Sender für z. B. MFV-Signale oder eine Ansageeinrichtung für Sprachsignale oder dergleichen sein kann.

Je nach Größe des ersten Speichers 131 beziehungsweise des dritten Speichers 430 können in der jeweiligen Anrufliste weitere Informationen wie Datum, Uhrzeit, Zahl der Rufe zusammen mit der entsprechenden Teilnehmerkennung abgespeichert werden, sofern eine Teilnehmerkennung beziehungsweise Rufnummerninformation eines über das Vermittlungsnetz 30 rufenden Teilnehmers zur Verfügung steht. Im normalen Betrieb wird dem Benutzer des ersten Telekommunikationsendgerätes 100 nach Betätigung einer Taste der Tastatur 133 an der Anzeigevorrichtung 132 des ersten Telekommunikationsendgerätes 100 angezeigt, ob Anrufe in der Anrufliste des ersten Speichers 131 stehen. Durch Betätigung der Tastatur 133 können dann die Daten der einzelnen Rufe aus der Anrufliste angezeigt werden. Als Variante kann die Anzeigevorrichtung 132 des ersten Telekommunikationsendgerätes 100 bei entsprechender Größe auch direkt die Anrufliste anzeigen. Mittels einer Taste der Tastatur 133 kann ein Eintrag der Anrufliste ausgewählt, an der Anzeigevorrichtung 132 des ersten Telekommunikationsendgerätes 100 angezeigt und zur Unterscheidung von gegebenenfalls weiteren an der Anzeigevorrichtung 132 des ersten Telekommunikationsendgerätes 100 angezeigten Einträgen der Anrufliste markiert werden. Durch Betätigen einer entsprechenden Taste der Tastatur 133 oder durch Abheben eines in Figur 1 nicht dargestellten Handapparates des ersten Telekommunikationsendgerätes 100 wird der gerade ausgewählte beziehungsweise markierte Eintrag der Anrufliste automatisch durch die entsprechende Rufnummer angewählt. Die Anwahl kann jedoch auch schon bereits mit der Auswahl bzw. Markierung des entsprechenden Eintrags der Anrufliste erfolgen. Dabei kann es sich bei den Einträgen der Anrufliste bereits um die Rufnummern der entsprechend eingegangenen Rufe handeln.

Eine Abfrage der Anrufliste des ersten Telekommunikationsendgerätes 100 ist auch von weiteren an das Vermittlungsnetz 30 angeschlossenen Telekommunikationsendgeräten, beispielsweise vom zweiten Telekommunikationsendgerät 10 aus möglich. Dabei wird das erste Telekommunikationsendgerät 100 mittels seiner Rufnummer vom zweiten Telekommunikationsendgerät 10 angerufen. Nach Detektion des eingehenden Rufes durch die Steuerung 130 des ersten Telekommunikationsendgerätes 100 beziehungsweise durch eine in Figur 4 nicht dargestellte Steuerung der Nebenstellenanlage 400 wird das erste Telekommunikationsendgerät 100 belegt. Vom zweiten Telekommunikationsendgerät 10 kann nun eine Kennung für die Abfrage der für das erste Telekommunikationsendgerät 100 gespeicherten Daten eingegeben werden. Diese Kennung wird an das erste Telekommunikationsendgerät 100 beziehungsweise die Nebenstellenanlage 400 übertragen. Detektiert die Steuerung 130 des ersten Telekommunikationsendgerätes 100 beziehungsweise die Steuerung der Nebenstellenanlage 400 die Kennung, so kann sie den ersten Speicher 131 beziehungsweise den dritten Speicher 430 über die Leitungsschnittstelle 110 des ersten Telekommunikationsendgerätes 100 beziehungsweise eine in Figur 4 nicht dargestellte Leitungsschnittstelle der Nebenstellenanlage 400 adressieren. Die das erste Telekommunikationsendgerät 100 betreffenden Einträge der Anrufliste können dann veranlaßt durch die Steuerung 130 des ersten Telekommunikationsendgerätes 100 beziehungsweise die Steuerung der Nebenstellenanlage 400 über das Vermittlungsnetz 30 an das zweite Telekommunikationsendgerät 10 gesendet werden, sofern die vom zweiten Telekommunikationsendgerät 10 empfangene Kennung bereits dahingehend durch die Steuerung 130 des ersten Telekommunikationsendgerätes 100 beziehungsweise die Steuerung der Nebenstellenanlage 400 ausgewertet wurde, daß vom zweiten Telekommunikationsendgerät 10 die Anrufliste mit den das erste Telekommunikationsendgerät 100 betreffenden Einträgen abgefragt werden soll. Andernfalls veranlaßt die Steuerung 130 des ersten Telekommunikationsendgerätes 100 beziehungsweise die Steuerung der Nebenstellenanlage 400 die Aussendung eines Aufforderungssignals an das zweite Telekommunikationsendgerät 10 für eine weitere Kennungseingabe. Als Antwort auf das Aufforderungssignal wird am zweiten Telekommunikationsendgerät 10 die speziell für die Abfrage der gespeicherten Rufnummerninformationen der Anrufliste entsprechende Kennung eingegeben. Wird diese Kennung durch die Steuerung 130 des ersten Telekommunikationsendgerätes 100 beziehungsweise die Steuerung der Nebenstellenanlage 400 detektiert, so werden die Einträge der Anrufliste, die das erste Telekommunikationsendgerät 100 betreffen, an das zweite Telekommunikationsendgerät 10 übertragen.

Die an das zweite Telekommunikationsendgerät 10 übertragenen Einträge der Anrufliste können dann in entsprechender Weise an der Anzeigevorrichtung 5 des zweiten Telekommunikationsendgerätes 10 zur Darstellung gebracht und im zweiten Speicher 15 abgespeichert werden. Mittels der Auswahltaste 35 kann ein an der Anzeigevorrichtung 5 des zweiten Telekommunikationsendgerätes 10 dargestellter Eintrag der übermittelten Anrufliste ausgewählt und in der bereits beschriebenen Weise für einen Rückruf vom zweiten Telekommunikationsendgerät 10, eingeleitet durch erneute Betätigung einer Taste an einer Tastatur 25 des zweiten Telekommunikationsendgerätes 10 oder durch Abheben eines Handapparates des zweiten Telekommunikationsendgerätes 10 verwendet werden. Der Rückruf kann dabei auch bereits durch Betätigung der Auswahltaste 35 zur Auswahl eines Eintrags der Anrufliste eingeleitet werden. Enthält die Anrufliste nur einen Eintrag, kann gegebenenfalls auch ohne jegliche Tastenbetätigung nach Aufruf der Anrufliste der Rückruf automatisch eingeleitet werden. Ist das Vermittlungsnetz 30 ein ISDN-Netz, so können die Einträge der Anrufliste als Dateninformation in einem Signalisierungskanal, insbesondere einem D-Kanal, in Form eines Befehls an das zweite Telekommunikationsendgerät 10 übertragen werden. Auch die am zweiten Telekommunikationsendgerät 10 einzugebenden Kennungen zur Abfrage der Einträge der Anrufliste für das erste Telekommunikationsendgerät 100 können im D-Kanal an das erste Telekommunikationsendgerät 100 übertragen werden. Die Kennungen und die Einträge der Anrufliste können jedoch auch in Form einer codierten Zeichenfolge, insbesondere nach dem Mehrfrequenzverfahren (MFV) oder in Form codierter Sprachsignale in einem B-Kanal des ISDN-Vermittlungsnetzes 30 übertragen werden. Die Leitungsschnittstelle 110 des ersten Telekommunikationsendgerätes 100 beziehungsweise die Leitungsschnittstelle der Nebenstellenanlage 400 dienen neben der Bearbeitung der unteren Schichten des Protokolls für den Datenaustausch in den D-Kanälen zur Trennung der B- und D-Kanäle.

Die Kennungen zur Abfrage der Einträge der Anrufliste und die Einträge der Anrufliste können zusätzlich oder alternativ auch in Form von Datenpaketen an das erste Telekommunikationsendgerät 100 bzw. an das zweite Telekommunikationsendgerät 10 übertragen werden. Dabei kann das Vermittlungsnetz 30 als Telekommunikationsnetz, als Internet, als LAN (Local Area Network), als WAN (Wide Area Network) oder dergleichen ausgebildet sein.

Eine Zuordnung der Einträge der Anrufliste 431 des dritten Speichers 430 zu dem jeweiligen an die Nebenstellenanlage 400 angeschlossenen Telekommunikationsendgerät 100, 101, 102 erfolgt durch Zuordnung des jeweiligen Eintrags der Anrufliste 431 des dritten Speichers 430 zur Rufnummer des jeweiligen in der Teilnehmerliste 432 gespeicherten, an die Nebenstellenanlage 400 angeschlossenen Telekommunikationsendgerätes 100, 101, 102.

Es kann zusätzlich vorgesehen sein, daß die Einträge der Anrufliste nur nach Eingabe einer zulässigen Zugangsberechtigung am zweiten Telekommunikationsendgerät 10 zum zweiten Telekommunikationsendgerät 10 übertragen werden. Eine solche Zugangsberechtigung kann ein Paßwort sein, das mittels der Tastatur 25 des zweiten Telekommunikationsendgerätes 10 eingegeben und an das erste Telekommunikationsendgerät 100 beziehungsweise die Nebenstellenanlage 400 übertragen wird. Die Steuerung 130 des ersten Telekommunikationsendgerätes 100 bzw. die Steuerung der Nebenstellananlage 400 überträgt die Einträge der Anrufliste nur dann an das zweite Telekommunikationsendgerät 10, wenn das empfangene Paßwort vom zweiten Telekommunikationsendgerät 10 zulässig ist. Im Falle der Nebenstellenanlage 400 kann mittels des Paßwortes geregelt werden, daß vom zweiten Telekommunikationsendgerät 10 alle Einträge der Anrufliste 431 der Nebenstellenanlage 400 oder nur die Einträge von speziellen an die Nebenstellenanlage 400 angeschlossene Telekommunikationsendgeräten abgefragt werden können. Dazu findet ein Vergleich des vom zweiten Telekommunikationsendgerätes 10 empfangenen Paßwortes mit den im Paßwortspeicher 440 abgelegten Paßwörtern statt. Dabei kann der Paßwortspeicher 440 beispielsweise für jedes an die Nebenstellenanlage 400 angeschlossenen Telekommunikationsendgerät 100, 101, 102 einen eigenen Speicherbereich vorsehen. Stimmt das Paßwort in diesem Speicherbereich mit dem oder einem der vom zweiten Telekommunikationsendgerät 10 übertragenen Paßworte überein, so können die das entsprechende an die Nebenstellanlage 400 angeschlossene Telekommunikationsendgerät 100, 101, 102 betreffenden Einträge der Anrufliste 431 des dritten Speichers 430 an das zweite Telekommunikationsendgerät 10 übertragen werden.

Der Speicher 131 des ersten Telekommunikationsendgerätes 100 beziehungsweise der Speicher 430 der Nebenstellenanlage 400 kann zusätzlich eine Kurzwahlliste und/oder eine Telefonbuchliste enthalten, bei denen Rufnummern von Teilnehmern zusammen mit deren Namen gespeichert sind. Stellt die Steuerung 130 des ersten Telekommunikationsendgerätes 100 beziehungsweise die Steuerung der Nebenstellenanlage 400 fest, daß die Rufnummer eines eingehenden Rufes mit einer Rufnummer der Telefonbuchliste und/oder der Kurzwahlliste übereinstimmt, so kann dieser Name zusätzlich zur Rufnummer in der Anrufliste gegebenenfalls mit weiteren Daten, wie Uhrzeit und Datum des Anrufs gespeichert und bei Fernabfrage durch das zweite Telekommunikationsendgerät 10 an dieses übertragen werden. Das erste Telekommunikationsendgerät 100 ist als digitales Endgerät ausgebildet. Es kann jedoch für das erste Telekommunikationsendgerät 100 auch ein analoges Endgerät verwendet werden. Die Rufnummer eines rufenden Teilnehmers kann dann beispielsweise mittels eines Modulationsverfahrens von der Vermittlungsstelle zum ersten Telekommunikationsendgerät 100 zum Beispiel während der Rufpause übertragen werden, wie dies beispielsweise in den Vereinigten Staaten und in Großbritannien realisiert ist. Die auf diese Weise übertragene Rufnummer eines rufenden Teilnehmers wird dann in einem analogen ersten Telekommunikationsendgerät 100 ebenfalls in der Anrufliste abgelegt, falls eine solche vorhanden ist. Entsprechendes gilt für die Abspeicherung eingehender Rufnummern in der Anrufliste 431 einer analogen Nebenstellenanlage 400. Werden die Kennungen und gegebenenfalls das oder die Paßworte vom zweiten Telekommunikationsendgerät 10 zum ersten Telekommunikationsendgerät 100 und die Einträge der Anrufliste vom ersten Telekommunikationsendgerät 100 zum zweiten Telekommunikationsendgerät 10 in einem Sprachfrequenzband übertragen, beispielsweise mittels einer codierten MFV-Zeichenfolge, so kann sowohl ein digitales als auch ein analoges Vermittlungsnetz 30 verwendet werden. Bei einem analogen Vermittlungsnetz 30 werden die Kennungen, gegebenenfalls Paßworte und die Einträge der Anrufliste dann über den Sprachkanal, bei Verwendung des digitalen ISDN-Netzes über einen B-Kanal und/oder einen D-Kanal übertragen. Die codierte MFV-Zeichenfolge der Kennungen und gegebenenfalls Paßworte, die vom zweiten Telekommunikationsendgerät 10 ausgesendet wird, wird beispielsweise in dem MFV-Empfänger 410 der Nebenstellenanlage 400 empfangen. Entsprechend werden beispielsweise Einträge der Anrufliste 431 des dritten Speichers 430 von dem Zeichensender 420 der Nebenstellenanlage 400 an das zweite Telekommunikationsendgerät 10 ausgesendet. Der Zeichensender 410 kann dabei auch eine Ansageeinrichtung sein, von der Einträge der Anrufliste 431 des dritten Speichers 430 in Form codierter Sprachsignale, das heißt in Sprachform an das zweite Telekommunikationsendgerät 10 übertragen werden. Zur Aussendung einer codierten Zeichenfolge an das zweite Telekommunikationsendgerät 10 kann der Zeichensender 420 auch als Modem ausgebildet sein.

Der zweite Speicher 15 kann Einträge der Anrufliste des ersten Telekommunikationsendgerätes 100 bzw. der Nebenstellenanlage 400 nach Übertragung an das zweite Telekommunikationsendgerät 10 speichern und zusätzlich eine eigene Anrufliste für am zweiten Telekommunikationsendgerät 10 eingehende Rufe umfassen. Umfaßt das zweite Telekommunikationsendgerät 10 keine Anzeigevorrichtung 5, so müssen die Einträge der Anrufliste vom ersten Telekommunikationsendgerät 100 bzw. von der Nebenstellenanlage 400 zum zweiten Telekommunikationsendgerät 10 in Form codierter Sprachsignale, also in Sprachform übertragen werden. Ist jedoch die Anzeigevorrichtung 5 am zweiten Telekommunikationsendgerät 10 vorgesehen, so können eine oder mehrere Zeilen der vom ersten Telekommunikationsendgerät 100 bzw. von der Nebenstellenanlage 400 an das zweite Telekommunikationsendgerät 10 übertragenen Anrufliste an der Anzeigevorrichtung 5 des zweiten Telekommunikationsendgerätes 10 zunächst dargestellt werden. Gegebenenfalls können durch Tastenbetätigung an der Tastatur 25 des zweiten Telekommunikationsendgerätes 10 weitere, aufgrund der beschränkten Größe der Anzeigevorrichtung 5 des zweiten Telekommunikationsendgerätes 10 zunächst nicht dargestellte Einträge der Anrufliste des ersten Telekommunikationsendgerätes 100 an der Anzeigevorrichtung 5 des zweiten Telekommunikationsendgerätes 10 zur Darstellung gebracht werden, wenn diese Einträge im zweiten Speicher 15 nach Übertragung vom ersten Telekommunikationsendgerät 100 an das zweite Telekommunikationsendgerät 10 abgelegt sind.

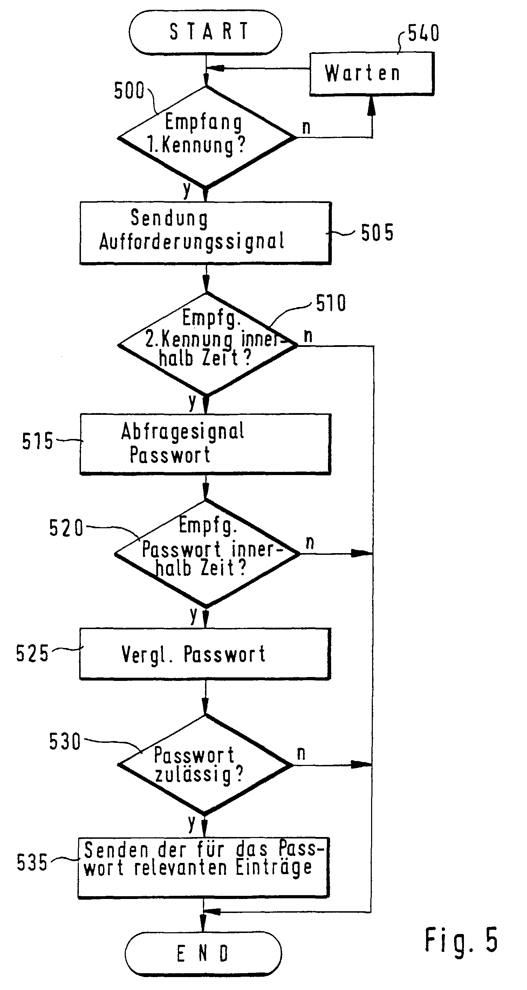

In Figur 5 ist ein Ablaufplan für die Steuerung 130 des ersten Telekommunikationsendgerätes 100 beziehungsweise die Steuerung der Nebenstellenanlage 400 dargestellt. Dabei soll angenommen werden, daß die Steuerung 130 des ersten Telekommunikationsendgerätes 100 ebenfalls einen Paßwortspeicher umfaßt. Bei einem Programmpunkt 500 prüft die jeweilige Steuerung, ob eine erste Kennung für die Abfrage gespeicherter Informationen empfangen wurde. Ist dies der Fall, so wird zu einem Programmpunkt 505 verzweigt, andernfalls wird zu einem Programmpunkt 540 verzweigt. Bei Programmpunkt 540 durchläuft die jeweilige Steuerung eine Warteschleife. Anschließend wird zu Programmpunkt 500 zurückverzweigt. Bei Programmpunkt 505 veranlaßt die jeweilige Steuerung die Aussendung eines Aufforderungssignals an das die erste Kennung aussendende zweite Telekommunikationsendgerät 10, dessen Rufnummer beim Verbindungsaufbau vom zweiten Telekommunikationsendgerät 10 zum ersten Telekommunikationsendgerät 100 übertragen wurde und das zweite Telekommunikationsendgerät 10 beim ersten Telekommunikationsendgerät 100 identifiziert. Das Aufforderungssignal enthält eine Aufforderung zur Eingabe einer zweiten Kennung. Anschließend wird zu einem Programmpunkt 510 verzweigt. Bei Programmpunkt 510 prüft die jeweilige Steuerung, ob innerhalb einer vorgegebenen Zeit die zweite Kennung für die Abfrage der gespeicherten Rufnummerninformationen der jeweiligen Anrufliste empfangen wurde. Ist dies der Fall, so wird zu einem Programmpunkt 515 verzweigt, andernfalls wird der Programmteil verlassen. Bei Programmpunkt 515 veranlaßt die jeweilige Steuerung die Aussendung eines Abfragesignals an das zweite Telekommunikationsendgerät 10, das am zweiten Telekommunikationsendgerät 10 die Eingabe mindestens eines Paßwortes veranlassen soll. Anschließend wird zu einem Programmpunkt 520 verzweigt. Bei Programmpunkt 520 prüft die jeweilige Steuerung, ob ein Paßwort innerhalb einer weiteren vorgegebenen Zeit empfangen wurde. Ist dies der Fall, so wird zu einem Programmpunkt 525 verzweigt, andernfalls wird der Programmteil verlassen. Bei Programmpunkt 525 vergleicht die jeweilige Steuerung das oder die empfangenen Paßworte auf Zulässigkeit mit im jeweiligen Paßwortspeicher abgelegten Daten. Anschließend wird zu einem Programmpunkt 530 verzweigt. Bei Programmpunkt 530 prüft die jeweilige Steuerung, ob das oder die vom zweiten Telekommunikationsendgerät 10 empfangenen Paßworte zulässig sind. Ist dies der Fall, so wird zu einem Programmpunkt 535 verzweigt, andernfalls wird der Programmteil verlassen. Bei Programmpunkt 535 veranlaßt die jeweilige Steuerung die Aussendung der für das oder die empfangenen Paßworte relevanten Einträge der jeweiligen Anrufliste an das zweite Telekommunikationsendgerät 10. Anschließend wird der Programmteil verlassen.

Das erfindungsgemäße Verfahren ist sowohl für drahtgebundene als auch für drahtlose Vermittlungsnetze 30 realisierbar, also beispielsweise auch für ein Mobilfunknetz, insbesondere nach dem GSM-Standard (Global System for Mobile Communications).

Wird eine Rufnummer der Anrufliste an ersten Telekommunikationsendgerät 100 oder am zweiten Telekommunikationsendgerät 10 für einen Rückruf angewählt, so kann diese Rufnummer beziehungsweise der gesamte zugehörige Eintrag der Anrufliste nach erfolgreicher Anwahl dieser Rufnummer, das heißt nach erfolgreichem Verbindungsaufbau aus der Anrufliste gelöscht werden. Je nach Standort des zweiten Telekommunikationsendgerätes 10 kann es erforderlich sein, für einen Rückruf anhand vom ersten Telekommunikationsendgerät 100 bzw. von der Nebenstellenanlage 400 empfangener Einträge einer Anrufliste die entsprechende Rufnummer für den Rückruf mit einer entsprechenden Vorwahl zu versehen, wozu es erforderlich ist, am zweiten Telekommunikationsendgerät 10 den Standort des zweiten Telekommunikationsendgerätes 10 einzugeben. Dies ist vor allem bei einem mobilen zweiten Telekommunikationsendgerät 10 von Bedeutung. Die am zweiten Telekommunikationsendgerät 10 anzuwählende Rufnummer der vom ersten Telekommunikationsendgerät 100 beziehungsweise von der Nebenstellenanlage 400 an das zweite Telekommunikationsendgerät 10 übertragenen Anrufliste kann dann um die richtige Vorwahl ergänzt, vom zweiten Telekommunikationsendgerät 10 aus zurückgerufen werden.

## Patentansprüche

1. Verfahren zur Abfrage gespeicherter Rufnummerninformationen mindestens eines bei einem an ein Telekommunikationsnetz (30) angeschlossenenen ersten Telekommunikationsendgerät (100) eingegangenen Rufes, wobei die Rufnummerninformationen in einem dem ersten Telekommunikationsendgerät (100) zugeordneten Speicher (131, 430) abgelegt sind, **dadurch gekennzeichnet, daß** von einem zweiten an das Telekommunikationsnetz (30) angeschlossenen Telekommunikationsendgerät (10) eine Verbindung zu dem dem ersten Telekommunikationsendgerät (100) zugeordneten Speicher (131, 430) aufgebaut wird und daß die gespeicherten Rufnummerninformationen an das zweite Telekommunikationsendgerät (10) übertragen werden.

2. Verfahren nach Anspruch 1, dadurch gekennzeichnet, daß die gespeicherten Rufnummerninformationen an einer Anzeigevorrichtung (5) des zweiten Telekommunikationsendgerätes (10) dargestellt werden.

3. Verfahren nach Anspruch 1 oder 2, dadurch gekennzeichnet, daß die gespeicherten Rufnummerninformationen nur nach Eingabe einer zulässigen Zugangsberechtigung am zweiten Telekommunikationsendgerät (10) zum zweiten Telekommunikationsendgerät (10) übertragen werden.

4. Verfahren nach Anspruch 1, 2 oder 3, dadurch gekennzeichnet, daß die Verbindung vom zweiten Telekommunikationsendgerät (10) zum Speicher (131, 430) nur dann aufgebaut wird, wenn am zweiten Telekommunikationsendgerät (10) eine für die Abfrage der gespeicherten Rufnummerninformationen entsprechende Kennung eingegeben wird.

5. Verfahren nach einem der vorherigen Ansprüche, dadurch gekennzeichnet, daß die gespeicherten Rufnummerninformationen in Form einer codierten Zeichenfolge, insbesondere nach dem Mehrfrequenzverfahren (MFV) an das zweite Telelcommunikationsendgerät (10) übertragen werden.

6. Verfahren nach einem der vorherigen Ansprüche, dadurch gekennzeichnet, daß die gespeicherten Rufnummerninformationen in Form eines Befehls in einem Signalisierungskanal, insbesondere einem D-Kanal eines digitalen Vermittlungsnetzes, insbesondere eines Integrated Services Data Network (ISDN), an das zweite Telekommunikationsendgerät (10) übertragen werden.

7. Verfahren nach einem der vorherigen Ansprüche, dadurch gekennzeichnet, daß die gespeicherten Rufnummerninformationen in Form von Datenpaketen an das zweite Telekommunikationsendgerät (10) übertragen werden.

8. Verfahren nach einem der vorherigen Ansprüche, dadurch gekennzeichnet, daß die gespeicherten Rufnummerninformationen in Form codierter Sprachsignale an das zweite Telekommunikationsendgerät (10) übertragen werden.

9. Verfahren nach einem der vorherigen Ansprüche, dadurch gekennzeichnet, daß die gespeicherten Rufnummerninformationen nach Übertragung zum zweiten Telekommunikationsendgerät (10) in einem dem zweiten Telekommunikationsendgerät (10) zugeordneten Speicher (15) abgelegt werden.

10. Verfahren nach einem der vorherigen Ansprüche, dadurch gekennzeichnet, daß vom ersten Telekommunikationsendgerät (100) oder einer mit dem ersten Telekommunikationsendgerät (100) verbundenen Nebenstellenanlage (400) ein Aufforderungssignal an das zweite Telekommunikationsendgerät (10) übertragen wird, daß als Antwort auf das Aufforderungssignal die für die Abfrage der gespeicherten Rufnummerninformationen entsprechende Kennung am zweiten Telekommunikationsendgerät (10) eingegeben wird und daß die gespeicherten Rufnummerninformationen frühestens dann an das zweite Telekommunikationsendgerät (10) übertragen werden, wenn am ersten Telekommunikationsendgerät (100) oder an der Nebenstellenanlage (400) die für die Anfrage der gespeicherten Rufnummerninformationen entsprechende Kennung empfangen wurde.

11. Verfahren nach einem der vorherigen Ansprüche, dadurch gekennzeichnet, daß, sofern die gespeicherten Rufnummerninformationen eine Rufnummer umfassen, nach Empfang der gespeicherten Rufnummerninformationen vom zweiten Telekommunikationsendgerät (10) diese Rufnummer angewählt wird.

12. Verfahren nach Anspruch 11, dadurch gekennzeichnet, daß die Rufnummer erst dann angewählt wird, wenn eine Auswahltaste (35) betätigt wird, die diese Rufnummer aus den am zweiten Telekommunikationsendgerät (10) empfangenen gespeicherten Rufnummerninformationen auswählt.
